# EUROPÄISCHE PATENTSCHRIFT

(11) **EP 2 052 281 B1**
(45) Veröffentlichungstag und Bekanntmachung des Hinweises auf die Patenterteilung: **17.07.2019**
(21) Anmeldenummer: 07765242.8
(22) Anmeldetag: 20.07.2007
(51) Int. Cl.: G01V 3/12

(54) **VORRICHTUNG UND VERFAHREN ZUR DETEKTION VON NICHTLINEAREN ELEKTRONISCHEN BAUELEMENTEN ODER SCHALTUNGEN INSBESONDERE EINER SPRENGFALLE ODER DERGLEICHEN**
DEVICE AND METHOD FOR DETECTING NON-LINEAR ELECTRONIC COMPONENTS OR CIRCUITS ESPECIALLY OF A BOOBY TRAP OR THE LIKE
DISPOSITIF ET PROCÉDÉ DE DÉTECTION DE COMPOSANTS OU DE CIRCUITS ÉLECTRONIQUES NON LINÉAIRES, EN PARTICULIER D'UN DISPOSITIF EXPLOSIF IMPROVISÉ OU ANALOGUE

(30) Priorität: 17.08.2006 DE 102006038627
(43) Veröffentlichungstag der Anmeldung: 29.04.2009
(73) Patentinhaber: Rheinmetall Waffe Munition GmbH, 29345 Unterlüss (DE)
(72) Erfinder: JUNG, Markus, 29358 Eicklingen (DE); WOLLMANN, Gerd, 29229 Celle (DE)
(74) Vertreter: Dietrich, Barbara
(86) Internationale Anmeldenummer: PCT/EP2007/006461
(87) Internationale Veröffentlichungsnummer: WO 2008/019750

(56) Entgegenhaltungen:
- GB-A- 2 381 077
- US-A- 3 075 461
- US-A1- 2003 179 126
- THOMAS H. JONES: "An overview of non-linear junction detection technology for countersurveillance"[Online] Februar 1999 (1999-02), Seiten 1-9, XP002502156 Gefunden im Internet: URL:http://www.reiusa.net/system/products/ NJE-4000/NLJDTech.pdf> [gefunden am 2008-10-31]

## Beschreibung

Die Erfindung betrifft eine Vorrichtung und ein Verfahren zur Detektion von nichtlinearen elektronischen Bauelementen bzw. elektronischer Schaltungen, insbesondere zur Detektion der Elektronik einer improvisierten explosiven Vorrichtung (IED) oder dergleichen.

Ein bekanntes Verfahren zur Detektion von nichtlinearen Bauelementen ist die "Non-Linear Junction Detektion" (NLJD). Dieses Verfahren besitzt die Fähigkeit, mit Halbleiterbauelementen aufgebaute elektronische Schaltungen detektieren zu können. Durch das nichtlineare Verhalten werden in die Schaltung eingekoppelte Signale einer festen Frequenz in Signale mit der Vielfachen der eingestrahlten Frequenz umgewandelt und wieder abgestrahlt.

Ein derartiges Verfahren sowie ein entsprechender nichtlinearer Übergangsdetektor werden in der US 6,163,259 A ausführlich beschrieben. Ein weiterer nichtlinearer Übergangsdetektor wird mit der WO 02/065419 A1 offenbart. Eine weitere WO 2004/038455 A1 beschäftigt sich mit einem Verfahren und einer Vorrichtung zur Detektion von so genannten Abhörgeräten. Prinzipiell arbeitet das Verfahren durch Auswertung einer 2. und einer 3. harmonischen, der am Ziel reflektierten Primärfrequenz. Aus diesen beiden harmonischen wird dann die Information über das Vorhandensein oder Nichtvorhandensein einer elektronischen Schaltung gezogen.

Aus Thomas H. Jones: "An overview of non-linear junction detection technology for countersurveillance" ist eine Vorrichtung (NLJD) zur Detektion von elektronischen Bauelementen oder Schaltungen eines Ziels bekannt. Insbesondere werden hier Ausführungen gemacht, die sich mit der Funktionsweise eines NLJD's beschäftigen.

Die GB 2 381 077 A offenbart eine Vorrichtung zur Prävention von Ladendiebstählen. Hierzu sind an Gegenständen eines Geschäfts, welche gestohlen werden könnten, Etiketten mit nichtlinearen Verbindungen befestigt. Der Detektor wird am Ausgang des Ladens platziert, und schlägt an, wenn der Gegenstand mit dem Etikett das Geschäft verlässt.

IED's sind Vorrichtungen oder (Spreng-)Fallen, die in der Regel aus vier Hauptgruppen bestehen, einem Auslöser, Explosivstoffen alleine oder in Verbindung mit giftigen Chemikalien, biologischen Giftstoffen oder radiologischem Material und einem Effektor. Der Auslöser kann mechanischer oder elektronischer Natur sein.

Zur Gefahrenabwendung ist es notwendig zu wissen, ob und wo sich ein IED befindet, wann eine Detonation dieses IED's zu befürchten ist, um welchen und um wie viel Sprengstoff es sich handelt. Weitere wichtige Informationen können die biologischen oder radioaktiven Materialien der IED betreffen. Der Sprengstoff kann dabei beispielsweise mittels bekannter Lasertechnologien oder Röntgenstrahlen detektiert werden, Informationen über den biologischen Inhalt beispielsweise durch den Einsatz von Biosensoren bezogen werden. Besitzen die IED zudem eine Elektronik, kann nach dem Vorhandensein der Elektronik gesucht werden. Dies kann mittels der bereits erwähnten NLJD erfolgen.

Die Detektionsreichweite eines Zieles oder Targets (beispielsweise eines IED) ist sehr stark vom Signalrauschverhalten der harmonischen Frequenzen abhängig. In praktischen Untersuchungen wurde festgestellt, dass zwischen einfachen Schaltungen und hochwertig geschirmten Schaltungen nahezu ein Faktor 8 - 12 im Detektionsabstand erreicht wird. Dies entspricht einem Faktor zwischen 4000- 20000 für die empfangenen Signalleitungen.

Aufgrund des Signalrauschverhaltens der nach geschalteten Verstärker und möglicher Modulationsverfahren gibt es am Empfänger eine Mindestempfangsleistung, die zur Detektion notwendig ist.

Bezüglich der Sendeleistung gibt es sowohl CW - Systeme (Continuous Wave = Dauersender) als auch gepulste Systeme für den Handbetrieb. Aufgrund des Handbetriebes ist jedoch die Sendeleistung durch Werte aus den Schutzvorgaben des Personenschutzes begrenzt.

Hier stellt sich die Erfindung die Aufgabe, ein Verfahren und eine Vorrichtung anzugeben, mit dem die derzeitige Reichweite eines nichtlinearen Übergangsdetektors deutlich gesteigert werden kann.

Gelöst wird die Aufgabe die Vorrichtung betreffend durch die Merkmale des Patentanspruchs 1, das Verfahren betreffend gemäß Patentanspruch 5. Vorteilhafte Ausgestaltungen sind in den Unteransprüchen aufgezeigt.

Die bisherigen NLJD- Systeme arbeiten auf einer festen Frequenz. Stimmt diese nicht mit einem der so genannten Transmissionsfenster des Zieles überein, was häufiger der Fall ist, kann es zwar passieren, dass das Signal des Senders in das geschlossene System (Ziel) gelangt, der Detektor aber weder die 2. noch die 3. harmonische erkennen kann, weil das geschlossene System in diesem Frequenzgang eben kein Transmissionsfenster besitzt. Oftmals hat das Sendesignal gar nicht erst die Elektronik erreicht.

Daher liegt der Erfindung die Idee zugrunde, abstimmbare Sender und Detektoren (Empfänger) in die nichtlinearen Detektionssysteme einzubinden und ein schmalbandiges, in der Frequenz variierbares Signal zu verwenden. Der scannbare Frequenzbereich sollte dabei
zwischen 10 - 1000 MHz liegen. Die Empfangsfrequenz für die 2. und 3. harmonische wird entsprechend der Sendefrequenz nachgeführt.

Ziel der Abstimmung des Senders ist es, die Dämpfungs- (beim Einkoppeln in die Hülle und Auskopplung aus der Hülle des geschlossenen Systems - Ziels) und Kopplungsverluste (Kopplungsfaktor zwischen der eingekoppelten Leistung bei der Frequenz und der Leistung, die in die harmonischen transformiert wird) zu reduzieren. Da beide Verluste von der Frequenz abhängig sind, kann durch Variation der Senderfrequenz für die Summe der Dämpfungen und der Kopplungsverluste ein minimaler Wert gefunden werden. Die Einkoppelfrequenz, bei welcher die beiden harmonischen am stärksten wieder reflektiert werden, stellt dann die optimale Frequenz dar.

Handelt es sich beim Ziel um ein Funkgerät, so kann zusätzlich der Empfangsgewinn des Ziels genutzt werden, wenn die Sendefrequenz innerhalb der Empfangsbandbreite des Ziels liegt.

Alle elektronischen Systeme wie auch elektronisch getriggerte IED's weisen das Phänomen auf, nur durch eine Art von Löchern / offenen Türen mit der Umgebung kommunizieren zu können. Durch die abstimmbaren Sender / Empfänger ist es nunmehr möglich, die Frequenzlöcher eines insbesondere abgeschirmten Targets / Zieles zu finden.

Mit dem neuen Verfahren kann nun in einfacher Art und Weise auch die örtliche Lage des Zieles (IED) bestimmt werden. Die Detektionsentfernung liegt zudem deutlich über den vorhandenen Geräten.

Ein weiterer Vorteil dieser Lösung besteht darin, dass in Umgebungen, in denen Geräte mit unterschiedlichen Frequenzen vorhanden sind, diese Frequenzen zur Detektion nicht berücksichtigt, sondern vielmehr beim Scannen der Frequenz ausgeschlossen werden. Die Fehlerrate wird auch dadurch minimiert.

Anhand eines Ausführungsbeispiels mit Zeichnung soll die Erfindung näher erläutert werden.

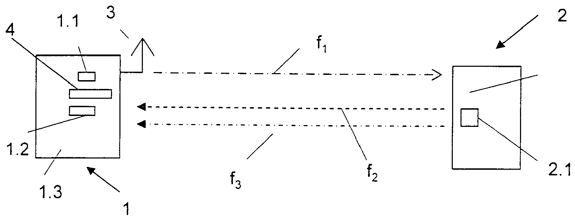

Es zeigt die einzige Figur einen nichtlinearen Übergangsdetektor 1 , bestehend aus wenigstens einem Sender 1.1 und wenigstens einem Empfänger 1.2, die sich in einer bevorzugten Ausführung in einem Gehäuse 1.3 befinden, zum Detektieren der Elektronik 2.1 eines Zieles (Target) 2. Getrennte Anordnungen von Sender 1.1 und Empfänger 1.2 sind auch möglich.

Der nichtlineare Übergangsdetektor 1 verfügt über wenigstens eine Antenne 3, über die ein schmalbandiges Signal f₁ innerhalb einer Bandbreite von mehreren 100 MHZ abstrahlt werden kann. Diese eine Antenne 3 ist eine breitbandige Antenne, die in der Lage ist, in beiden Polarisationen zu senden und zu empfangen (zirkular polarisiert). Möglich sind auch zwei Antennen (nicht näher dargestellt) in orthogonaler Anordnung, wobei eine zum Senden und eine Weitere zum Empfangen dient.

Entsprechend der abgestrahlten Frequenz f₁ werden im Empfangsbereich des Detektors 1.2 nur Signale der Frequenzen f₂= 2^{∗}f₁ und f₃= 3^{∗}f₁ empfangen und ausgewertet. Die Frequenz f₁ kann durch eine Elektronik 4 dabei sowohl linear als auch in bestimmten Schritten verändert werden. Diese Änderung erfolgt so lange, bis sich eine optimale Sendefrequenz f₁ eingestellt hat. (Dies ist dadurch erkennbar, dass auch die beiden harmonischen mit einer maximalen Signalstärke wieder auf den Empfänger 1.2 auftreffen. Dabei kann davon ausgegangen werden, dass die optimale Sendefrequenz f₁ als auch die harmonischen mit den so genannten Transmissionsfenstern des Zieles 2 und die Empfangsbandbreite des Zieles darstellen.) Mit dieser optimalen bzw. optimierten Frequenz f₁ wird nun das Ziel 2 bestrahlt und aus der transformierten Antwort im Detektor 1.2 auf das Vorhandensein von nichtlineare Schaltungen bzw. Bauelemente im Ziel 2 geschlussfolgert. Diese optimierte Frequenz f₁ erlaubt eine größere Entfernung zwischen dem Übergangsdetektor 1 und dem Ziel 2.

In Fällen, bei denen die Eingangsverstärkung des Zieles 2 genutzt wird, empfiehlt es sich, eine für die Kommunikation dieser Ziele 2 typische Frequenz zu wählen.

## Patentansprüche

1. Vorrichtung zur Detektion von nichtlinearen elektronischen Bauelementen oder Schaltungen (2.1) eines Zieles (2) aufweisend einen Übergangsdetektor (1) mit wenigstens einem Sender (1.1) und wenigstens einem Empfänger (1.2), die über wenigstens eine Antenne (3) ein Signal mit einer Frequenz (f₁) abstrahlt, welches in die nichtlineare Schaltung (2.1) oder in das nichtlineare elektronische Bauelement eingekoppelt und in Signale mit der Vielfachen (f₂, f₃) der eingestrahlten Frequenz (f₁) umgewandelt, zum Empfänger (1) gestrahlt und von der wenigstens einen Antenne (3) empfangen wird, wobei entsprechend der abgestrahlten Frequenz (f₁) im Empfangsbereich des Empfängers (1.2) nur Signale der 2. und 3. harmonischen empfangen und ausgewertet werden, **dadurch gekennzeichnet, dass** im Übergangsdetektor (1) eine Elektronik (4) eingebunden ist, mit deren Hilfe die Frequenz (f₁) eines schmalbandigen Signals innerhalb einer vorgebbaren Bandbreite zwischen 10-1000 MHz variiert wird, sodass für die Summe der Dämpfungs- und Kopplungsverluste ein minimaler Wert bei einem optimalen, eingekoppelten Signal erreicht wird, bei welcher die beiden harmonischen am stärksten wieder reflektiert werden.

2. Vorrichtung nach Anspruch 1, **dadurch gekennzeichnet, dass** die Antenne (3) eine breitbandige Antenne ist, die in beiden Polarisationen sendet und empfängt.

3. Vorrichtung nach Anspruch 1, **dadurch gekennzeichnet, dass** eine breitbandige Antenne (3) zum Senden und eine weitere breitbandige Antenne zum Empfangen vorgesehen sind.

4. Vorrichtung nach einem der Ansprüche 1 bis 3 **dadurch gekennzeichnet, dass** die elektronischen Bauelemente oder Schaltungen (2.1) eines Zieles (2) die Elektronik einer improvisierten explosiven Vorrichtung (IED) ist.

5. Verfahren zur Detektion von nichtlinearen elektronischen Bauelementen oder Schaltungen (2.1) eines Zieles (2) aufweisend einen Übergangsdetektor (1) mit wenigstens einem Sender (1.1) und einem Empfänger (1.2), die über wenigstens eine Antenne (3) ein Signal mit einer Frequenz (f₁) abstrahlt, welches in die nichtlineare Schaltung (2.1) oder in das nichtlineare elektronische Bauelement eingekoppelt und in Signale mit der Vielfachen (f₂, f₃) der eingestrahlten Frequenz (f₁) umgewandelt, zum Empfänger (1) gestrahlt und von der wenigstens einen Antenne (3) empfangen wird, wobei entsprechend der abgestrahlten Frequenz (f₁) im Empfangsbereich des Empfängers (1.2) nur Signale der 2. und 3. harmonischen empfangen und ausgewertet werden, **dadurch gekennzeichnet, dass** die Frequenz (f₁) des schmalbandigen Signals innerhalb einer vorgebbaren Bandbreite zwischen 10-1000 MHz variiert wird, sodass für die Summe der Dämpfungs- und Kopplungsverluste ein minimaler Wert bei einem optimalen, eingekoppelten Signal erreicht wird, bei welcher die beiden harmonischen am stärksten wieder reflektiert werden.

6. Verfahren nach Anspruch 5, **dadurch gekennzeichnet, dass** die Empfangsfrequenz für die 2. und 3. harmonische entsprechend der Sendefrequenz nachgeführt wird.

7. Verfahren nach Anspruch 5 oder 6, **dadurch gekennzeichnet, dass** die Eingangsverstärkung des Zieles (2) für das Einkoppeln in die nichtlineare Schaltung (2.1) genutzt wird.

8. Verfahren nach einem der Ansprüche 5 bis 7, **dadurch gekennzeichnet, dass** die Frequenz (f₁) linear als auch in bestimmten Schritten verändert wird.

9. Verfahren nach einem der Ansprüche 5 bis 8 zur Detektion der Elektronik einer improvisierten explosiven Vorrichtung (IED).

## Claims

1. Apparatus for detecting nonlinear electronic components or circuits (2.1) of a target (2) having a transition detector (1) with at least one transmitter (1.1) and at least one receiver (1.2), which apparatus uses at least one antenna (3) to emit a signal at a frequency (f₁), which signal is coupled into the nonlinear circuit (2.1) or into the nonlinear electronic component and converted into signals at the multiple (f₂, f₃) of the received frequency (f₁), radiated to the receiver (1) and received by the at least one antenna (3), wherein, according to the emitted frequency (f₁), only 2nd and 3rd harmonic signals are received and evaluated in the reception range of the receiver (1.2), **characterized in that** the transition detector (1) incorporates electronics (4) by means of which the frequency (f₁) of a narrowband signal is varied within a prescribable bandwidth between 10-1000 MHz, so that a minimum value is reached for the sum of the attenuation and coupling losses in the case of an optimum, coupled-in signal, at which sum the two harmonics are reflected again most strongly.

2. Apparatus according to Claim 1, **characterized in that** the antenna (3) is a wideband antenna that sends and receives in both polarizations.

3. Apparatus according to Claim 1, **characterized in that** there is provision for a wideband antenna (3) for sending and a further wideband antenna for receiving.

4. Apparatus according to one of Claims 1 to 3, **characterized in that** the electronics of an improvised explosive device (IED) are the electronic components or circuits (2.1) of a target (2).

5. Method for detecting nonlinear electronic components or circuits (2.1) of a target (2) having a transition detector (1) with at least one transmitter (1.1) and one receiver (1.2), which uses at least one antenna (3) to emit a signal at a frequency (f₁), which signal is coupled into the nonlinear circuit (2.1) or into the nonlinear electronic component and converted into signals at the multiple (f₂, f₃) of the received frequency (f₁), radiated to the receiver (1) and received by the at least one antenna (3), wherein, according to the emitted frequency (f₁), only 2nd and 3rd harmonic signals are received and evaluated in the reception range of the receiver (1.2), **characterized in that** the frequency (f₁) of the narrowband signal is varied within a prescribable bandwidth between 10-1000 MHz, so that a minimum value is reached for the sum of the attenuation and coupling losses in the case of an optimum, coupled-in signal, at which sum the two harmonics are reflected again most strongly.

6. Method according to Claim 5,
**characterized in that** the reception frequency for the 2nd and 3rd harmonics is tracked according to the transmission frequency.

7. Method according to Claim 5 or 6,
**characterized in that** the input gain of the target (2) is used for the coupling into the nonlinear circuit (2.1).

8. Method according to one of Claims 5 to 7,
**characterized in that** the frequency (f₁) is altered linearly and also in particular steps.

9. Method according to one of Claims 5 to 8 for detecting the electronics of an improvised explosive device (IED).

## Revendications

1. Dispositif de détection de composants ou de circuits électroniques non linéaires (2.1) d'une cible (2), comportant un détecteur de transition (1) muni d'au moins un émetteur (1.1) et d'au moins un récepteur (1.2) qui rayonne, par l'intermédiaire d'au moins une antenne (3), un signal de fréquence (f₁), lequel signal est injecté dans le circuit non linéaire (2.1) ou dans le composant électronique non linéaire, est converti en des signaux ayant un multiple (f₂, f₃) de la fréquence rayonnée (f₁), est rayonné vers le récepteur (1) et est reçu par ladite au moins une antenne (3), dans lequel seuls les signaux des 2ème et 3ème harmoniques sont reçus et évalués dans la zone de réception du récepteur (1.2) en accord avec la fréquence rayonnée (f₁),
**caractérisé en ce qu'**une électronique (4) est intégrée au détecteur de transition (1), à l'aide de laquelle la fréquence (f₁) d'un signal à bande étroite est amenée à varier dans une largeur de bande prédéfinissable entre 10 et 1000 MHz, de sorte qu'une valeur minimale soit atteinte pour la somme des pertes d'atténuation et de couplage dans le cas d'un signal injecté optimal pour lequel les deux harmoniques sont de nouveau le plus fortement réfléchies.

2. Dispositif selon la revendication 1, **caractérisé en ce que** l'antenne (3) est une antenne à large bande qui émet et reçoit dans les deux polarisations.

3. Dispositif selon la revendication 1, **caractérisé en ce qu'**il est prévu une antenne à large bande (3) pour l'émission et une autre antenne à large bande pour la réception.

4. Dispositif selon l'une des revendications 1 à 3, **caractérisé en ce que** les composants ou circuits électroniques (2.1) d'une cible (2) sont l'électronique d'un dispositif explosif improvisé (IED).

5. Procédé de détection de composants ou de circuits électroniques non linéaires (2.1) d'une cible (2), comportant un détecteur de transition (1) muni d'au moins un émetteur (1.1) et un récepteur (1.2) qui rayonne, par l'intermédiaire d'au moins une antenne (3), un signal de fréquence (f₁), lequel signal est injecté dans le circuit non linéaire (2.1) ou dans le composant électronique non linéaire, est converti en des signaux ayant un multiple (f₂, f₃) de la fréquence rayonnée (f₁), est rayonné vers le récepteur (1) et est reçu par ladite au moins une antenne (3), dans lequel seuls les signaux des 2ème et 3ème harmoniques sont reçus et évalués dans la zone de réception du récepteur (1.2) en accord avec la fréquence rayonnée (f₁),
**caractérisé en ce que** la fréquence (f₁) du signal à bande étroite est modifiée dans une largeur de bande prédéfinissable entre 10 et 1000 MHz, de sorte qu'une valeur minimale soit atteinte pour la somme des pertes d'atténuation et de couplage dans le cas d'un signal injecté optimal pour lequel les deux harmoniques sont le plus fortement à nouveau réfléchies.

6. Procédé selon la revendication 5, **caractérisé en ce que** la fréquence de réception des 2ème et 3ème harmoniques est réglée en accord avec la fréquence d'émission.

7. Procédé selon la revendication 5 ou 6, **caractérisé en ce que** l'amplification d'entrée de la cible (2) est utilisée pour l'injection effectuée dans le circuit non linéaire (2.1).

8. Procédé selon l'une des revendications 5 à 7, **caractérisé en ce que** la fréquence (f₁) est modifiée linéairement ainsi que par pas déterminés.

9. Procédé selon l'une des revendications 5 à 8 pour la détection de l'électronique d'un engin explosif improvisé (IED).
